# EUROPEAN PATENT APPLICATION

(11) **EP 4 322 444 A1**
(43) Date of publication of application: **14.02.2024**
(21) Application number: 21935859.5
(22) Date of filing: 07.12.2021
(51) Int. Cl.: H04L 5/00

(54) **BANDWIDTH PART ACTIVATION METHOD AND CONFIGURATION METHOD, AND ELECTRONIC DEVICE**

(30) Priority: 06.04.2021 CN 202110369312
(71) Applicant: Spreadtrum Communications (Shanghai) Co., Ltd., Shanghai 201203 (CN)
(72) Inventor: ZHOU, Huayu, Shanghai 201203 (CN); WANG, Miao, Shanghai 201203 (CN); PAN, Zhengang, Shanghai 201203 (CN)
(74) Representative: advotec.
(86) International application number: PCT/CN2021/136144
(87) International publication number: WO 2022/213642

(57) **Abstract**

The present application provides a bandwidth part activation method, which is applied to a UE. The method comprises: determining to use a reconfigured first bandwidth part, or determining to use a second bandwidth part. By means of the method shown in the present application, resource segmentation can be avoided, and radio frequency adjustment is reduced.

## Description

### CROSS-REFERENCE TO RELATED APPLICATIONS

The present disclosure claims the priority to Chinese Patent Application No. 202110369312.X, titled "METHOD FOR ACTIVATING BANDWIDTH PART, METHOD FOR CONFIGURING BANDWIDTH PART, AND ELECTRONIC DEVICE", filed with the China National Intellectual Property Administration (CNIPA) on April 6, 2021, which is incorporated herein by reference in its entirety.

### TECHNICAL FIELD

The present disclosure relates to the technical field of terminals, and in particular, to a method for activating a bandwidth part, a method for configuring a bandwidth part, and an electronic device.

### BACKGROUND

Currently, a next radio (NR) system only supports a non-narrowband user equipment (UE), such as a UE with a bandwidth of 100 MHz. A narrowband UE (i.e., reduced-capability UE, also known as RedCap UE), which has a bandwidth of less than 100 MHz, can be used for Machine Type Communication (MTC) or communication in Internet of Things (IoT), and has advantages of low cost and low power consumption.

In existing protocols or standards, a base station deems by default that only the non-narrowband UE, namely the UE with the bandwidth of 100 MHz, exists in a cell. When a narrowband UE enters the cell, the narrowband UE obtains a master information block (MIB), a frequency position of an initial downlink (DL) bandwidth part, and then a system information block 1 (SIB1). The narrowband UE obtains a reconfigured frequency position of the initial DL bandwidth part based on the SIB1. Further, the narrowband UE obtains a frequency position of an initial uplink (UL) bandwidth part. However, a reconfigured bandwidth of the initial DL bandwidth part may be greater than a DL bandwidth of the narrowband UE, and a reconfigured bandwidth of the initial UL bandwidth part may also be greater than a UL bandwidth of the narrowband UE (because the base station is not aware of existence of the narrowband UE in the cell). As a result, the narrowband UE is unable to access the network.

Therefore, how to optimize configurations of the initial DL bandwidth part and the initial UL bandwidth part to ensure access of the narrowband UE is an urgent problem to be resolved.

### SUMMARY

In a first aspect, the present disclosure provides a method for activating a bandwidth part, applied to a user equipment (UE), the method includes: determining to use a reconfigured first bandwidth part or determining to use a second bandwidth part.

In one or more embodiments, a first bandwidth part includes a first downlink (DL) bandwidth part and/or a first uplink (UL) bandwidth part, and the second bandwidth part includes a second DL bandwidth part and/or a second UL bandwidth part.

In one or more embodiments, said determining to use the reconfigured first bandwidth part or determining to use the second bandwidth part includes: determining to use a reconfigured first DL bandwidth part and/or a reconfigured first UL bandwidth part based on a higher-layer parameter; or determining to use the second DL bandwidth part and/or the second UL bandwidth part based on a higher-layer parameter.

In one or more embodiments, said determining to use the reconfigured first bandwidth part includes: receiving a message 2 (Msg2) or a message 4 (Msg4) within the reconfigured first DL bandwidth part; and/or sending a message (Msg3) or a Msg4 hybrid automatic repeat request-acknowledgement (Msg4-HARQ-ACK) within the reconfigured first UL bandwidth part.

In one or more embodiments, said determining to use the second bandwidth part includes: receiving a Msg2 or a Msg4 within the second DL bandwidth part; and/or sending a Msg3 or a Msg4-HARQ-ACK within the second UL bandwidth part.

In one or more embodiments, the method further includes: activating or using the reconfigured first UL bandwidth part and the reconfigured first DL bandwidth part after sending a Msg1.

In one or more embodiments, the method further includes: activating or using the second UL bandwidth part and the second DL bandwidth part after sending a Msg1.

In one or more embodiments, said determining to use the reconfigured first bandwidth part includes: receiving a Msg2 or a Msg4 within the reconfigured first DL bandwidth part; or sending a Msg1, a Msg3, or a Msg4-HARQ-ACK within the reconfigured first UL bandwidth part.

In one or more embodiments, said determining to use the second bandwidth part includes: receiving a Msg2 or a Msg4 within the second DL bandwidth part; or sending a Msg1, a Msg3, or a Msg4-HARQ-ACK within the second UL bandwidth part.

In one or more embodiments, the method further includes: activating or using the reconfigured first DL bandwidth part after sending a Msg1.

In one or more embodiments, the method further includes: activating or using the second DL bandwidth part after sending a Msg1.

In one or more embodiments, said determining to use the reconfigured first bandwidth part includes: receiving a first-type message, a Msg2, or a Msg4 within the reconfigured first DL bandwidth part; and/or sending a Msg3 or a Msg4-HARQ-ACK within the reconfigured first UL bandwidth part.

In one or more embodiments, said determining to use the second bandwidth part includes: receiving a first-type message, a Msg2, or a Msg4 within the second DL bandwidth part; and/or sending a Msg3 or a Msg4-HARQ-ACK within the second UL bandwidth part.

In one or more embodiments, the method further includes: activating or using the reconfigured first UL bandwidth part after sending a Msg1.

In one or more embodiments, the method further includes: activating or using the second UL bandwidth part after sending a Msg1.

In one or more embodiments, the first-type message includes at least one of a system information block 1 (SIB1), other system information (OSI), or a paging message.

In a second aspect, the present disclosure provides a method for configuring a bandwidth part, applied to a UE, where the method includes: determining a configuration of a first DL bandwidth part, and/or determining a resource configuration within a first UL bandwidth part and/or a resource configuration within the first DL bandwidth part.

In one or more embodiments, said determining the configuration of the first DL bandwidth part includes: determining that a reconfigured frequency position is not effective; or using a frequency position of a control resource set 0 (CORESETO) as a frequency position of a DL bandwidth part; or determining that a frequency position of a DL bandwidth part of a dedicated radio resource control (RRC) configuration includes a CORESETO.

In one or more embodiments, said determining that the reconfigured frequency position is not effective includes: after receiving a Msg4, determining that the reconfigured frequency position is not effective.

In one or more embodiments, said using the frequency position of the CORESETO as the frequency position of the DL bandwidth part includes: after receiving a Msg4, using the frequency position of the CORESETO as the frequency position of the DL bandwidth part.

In one or more embodiments, said determining the resource configuration within the first UL bandwidth part and/or the resource configuration within the first DL bandwidth part includes: determining that a resource of a Msg3 is limited within a CORESETO; or assuming that a resource of a Msg3 is limited within a CORESETO; or skipping an expectation that a resource of a Msg3 is not within a CORESETO.

In one or more embodiments, the method further includes: when the resource of the Msg3 is not within the CORESETO, determining that access is barred.

In one or more embodiments, said determining the resource configuration within the first UL bandwidth part and/or the resource configuration within the first DL bandwidth part includes: when a Msg1 carries a first indication, determining the resource configuration within the first UL bandwidth part.

In one or more embodiments, the first indication is configured to indicate that the UE is a narrowband UE.

In one or more embodiments, said determining the resource configuration within the first UL bandwidth part and/or the resource configuration within the first DL bandwidth part includes: determining that a resource of a physical uplink control channel (PUCCH) of a Msg4-HARQ-ACK is limited within a CORESETO; or assuming that a resource of a Msg4-HARQ-ACK is limited within a CORESETO; or skipping an expectation that a resource of a Msg4-HARQ-ACK is not within a CORESETO.

In one or more embodiments, the method further includes: if the resource of the Msg4-HARQ-ACK is not within the CORESETO, determining that access is barred.

In one or more embodiments, said determining the resource configuration within the first UL bandwidth part and/or the resource configuration within the first DL bandwidth part includes: when a Msg1 or a Msg3 carries a second indication, determining the resource configuration within the first UL bandwidth part.

In one or more embodiments, the second indication is configured to indicate that the UE is a narrowband UE.

In one or more embodiments, said determining the resource configuration within the first UL bandwidth part and/or the resource configuration within the first DL bandwidth part includes: determining that a physical downlink shared channel (PDSCH) scheduled in a DL control information format 1-0 (DCI format 1-0) is within a CORESETO.

In one or more embodiments, said determining the resource configuration within the first UL bandwidth part and/or the resource configuration within the first DL bandwidth part includes: after receiving a Msg4, determining that a factor of a frequency resource unit of a PDSCH scheduled in a DCI format 1-0 is 1.

In a third aspect, the present disclosure provides an apparatus for activating a bandwidth part, including a determining module configured to determine to use a reconfigured first bandwidth part or determine to use a second bandwidth part.

In a fourth aspect, the present disclosure provides an apparatus for configuring a bandwidth part, including a determining module configured to determine a configuration of a first DL bandwidth part, and/or determine a resource configuration within a first UL bandwidth part and/or a resource configuration within the first DL bandwidth part.

In a fifth aspect, the present disclosure provides a chip module, including the apparatus according to the third aspect.

In a sixth aspect, the present disclosure provides a chip module, including the apparatus according to the fourth aspect.

In a seventh aspect, the present disclosure provides an electronic device, where the electronic device includes a processor and a memory, the memory stores an application program or a program instruction, and the application program or the program instruction is executed by the processor to enable the electronic device to execute the method according to the first aspect.

In an eighth aspect, the present disclosure provides an electronic device. The electronic device includes a processor and a memory, the memory stores an application program or a program instruction, and the application program or the program instruction is executed by the processor to enable the electronic device to execute the method according to the second aspect. The method described in the present disclosure can avoid resource segmentation and reduce radio frequency (RF) retuning.

### BRIEF DESCRIPTION OF DRAWINGS

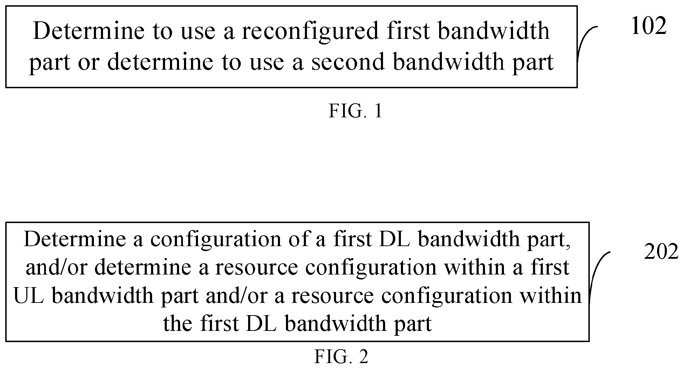

FIG. 1 is a flowchart of a method for activating a bandwidth part according to some embodiments of the present disclosure;
FIG. 2 is a flowchart of a method for configuring a bandwidth part according to some embodiments of the present disclosure; and
FIG. 3 is a schematic structural diagram of a UE according to some embodiments of the present disclosure.

### DESCRIPTION OF EMBODIMENTS

The following describes the technical solutions in embodiments of the present disclosure with reference to the accompanying drawings. In the description, unless otherwise specified, "/" means "or", for example, "A/B" may mean A or B. The term "and/or" herein merely describes an association relationship between associated objects, and it indicates three types of relationships. For example, "A and/or B" may indicate that A exists alone, both A and B exist, or B exists alone.

In addition, the terms such as "first" and "second" are used only for descriptive purposes, and should not be construed as indicating or implying relative importance or implying the quantity of indicated technical features. Thus, features defined with "first" and "second" may explicitly or implicitly include one or more of the features. In the description of the embodiments of the present disclosure, unless otherwise specified, "a plurality of" means two or more.

The following explains and describes technologies in existing long term evolution (LTE) and NR:

### Bandwidth part:

In the NR, the bandwidth part is introduced. The bandwidth part is a continuous frequency resource on a cell carrier, and a network equipment can configure bandwidth parts with different sizes for different UEs. For a UE, a configured and activated bandwidth part is referred to as an active bandwidth part. Data and control information that are sent by the UE through an uplink (UL), or data and control information that are received by the UE through a downlink (DL) will be limited within the active bandwidth part. For a UE, after a bandwidth part is activated, it can also be said that the UE switches to the bandwidth part.

Further, initial access in the NR is described.

In the NR, generally, the UE supports a bandwidth of 100 MHz. During initial access, the UE blindly checks a primary synchronization signal (PSS)/a secondary synchronization signal (SSS)/a physical broadcast channel (PBCH) (PSS/SSS/PBCH) in a synchronization signal block to obtain a master information block (MIB) and time index information that are carried in the PBCH. Based on information in the MIB, the UE obtains a configuration for scheduling a control resource set (CORESET) (which can be referred to as a CORESETO) and a search space set (which can be referred to as a search space set 0) of a SIB 1. Further, the UE can monitor a TypeO-physical downlink control channel (PDCCH) for scheduling a physical downlink shared channel (PDSCH) that carries the SIB 1, and obtains the SIB 1 through decoding. Because a table is used to set a bandwidth of the CORESETO in the PBCH, a maximum bandwidth of the CORESETO is implicitly defined in the protocol. Further, as defined in the specification, a frequency-domain resource of the PDSCH that carries the SIB1 is within the bandwidth (physical resource blocks (PRBs)) of the CORESETO. Therefore, a maximum bandwidth of the PDSCH that carries the SIB 1 is also implicitly defined in the protocol. In fact, in an idle state, the UE works within an initial active DL bandwidth part. By default, a frequency-domain position of the initial active DL bandwidth part is the same as a frequency-domain position of the CORESETO (in a non-default mode, the frequency-domain position of the initial active DL bandwidth part can be modified by signaling to cover the frequency-domain position of the CORESETO). Therefore, the maximum bandwidth of the initial active DL bandwidth part is implicitly defined in the protocol. Generally, the UE receives the SIB 1, other system information (OSI), and a paging message within the initial active DL bandwidth part.

A narrowband UE (i.e., reduced-capability UE, also referred to as a RedCap UE), which has a bandwidth of less than 100 MHz, can be used for communication in the MTC or the IoT. The initial access of the narrowband UE is a problem to be addressed.

For the initial active DL bandwidth part, the MIB configures a frequency position of the initial active DL bandwidth part by using 4 bits (which is equivalent to the frequency position of the CORESETO), and the SIB1 can reconfigure the frequency position of the initial active DL bandwidth part (further including configuration of control and data channels). The frequency position configured by the SIB1 (by using a higher-layer parameter *LocationAndBandwidth*) is effective only after a message 4 (Msg4).

For an initial active UL bandwidth part, the SIB1 configures a frequency position of the initial active UL bandwidth part (further including configuration of control and data channels). The frequency position configured by the SIB1 (by using the higher-layer parameter *LocationAndBandwidth*) is effective immediately for a message 1 (Msg1), a message 3 (Msg3), and subsequent operations.

To resolve the above technical problem, two solutions are proposed:
A first solution is based on a separate initial active DL bandwidth part and a separate initial active UL bandwidth part. In the SIB 1, a base station broadcasts configurations (including frequency positions) of an initial active DL bandwidth part and an initial active UL bandwidth part that are dedicated to the narrowband UE. A bandwidth part dedicated to the narrowband UE is also known as the separate initial active DL bandwidth part and the separate initial active UL bandwidth part. By default, the narrowband UE configures its own initial active DL bandwidth part and initial active UL bandwidth part based on the separate initial active DL bandwidth part and the separate initial active UL bandwidth part.

The first solution can simplify the implementation of the UE, but requires the network to have the separate initial active DL bandwidth part and the separate initial active UL bandwidth part, which may adversely complicate the implementation of the network and result in resource segmentation.

A second solution is based on a shared initial active DL bandwidth part and a shared initial active UL bandwidth part. The narrowband UE still configures frequency positions of its initial active DL bandwidth part and initial active UL bandwidth part based on an original initial active DL bandwidth part and an original initial active UL bandwidth part (which are used for a non-narrowband UE). In order to prevent the current channel/signal resource (for example, in a current timeslot) from falling outside the bandwidth of the narrowband UE, following methods can be adopted:
(1) The narrowband UE needs to perform radio frequency (RF) retuning. That is, if the current channel/signal resource (for example, in the current timeslot) falls outside the bandwidth of the narrowband UE, the narrowband UE adjusts a center frequency of the RF to cover the current channel/signal resource.
(2) The narrowband UE uses a separate resource configuration (mainly in a frequency domain). That is, the position of a channel/signal frequency resource configured by the base station for the narrowband UE falls within the bandwidth of the narrowband UE.
(3) A configuration provided by the base station is adopted. That is, the base station configures a same initial active DL bandwidth part and initial active UL bandwidth part for the narrowband UE and the non-narrowband UE.

In the second solution, although the network does not need to configure the separate initial active DL bandwidth part and the separate initial active UL bandwidth part, the following situations may still exist:

The RF retuning requires the UE to frequently adjust the center frequency of the RF, which is not friendly to the implementation and the power consumption of the UE. In addition, the RF retuning requires a certain time gap, which may result in inconsistent behavior between the narrowband UE and the non-narrowband UE. This makes it difficult for the narrowband UE and the non-narrowband UE to coexist.

The narrowband UE uses the separate resource configuration (mainly in the frequency domain). In this way, the effect achieved in the frequency domain is similar to the effect achieved by the separate initial active DL bandwidth part and the dependent initial active UL bandwidth part. However, there is still a situation similar to those caused by the separate initial active DL bandwidth part and the dependent initial active UL bandwidth part, and flexibility of the time-domain resource is relatively poor.

The configuration provided by the base station is adopted, which may adversely affect the non-narrowband UE. In other words, the non-narrowband UE cannot use more resources.

In order to overcome the deficiencies in the first solution and the second solution, an embodiment of the present disclosure provides a method for activating a bandwidth part. The method can be applied to the narrowband UE mentioned above.

In S102, the narrowband UE determines to use a reconfigured first bandwidth part or determines to use a second bandwidth part.

Using the reconfigured first bandwidth part may refer to that the narrowband UE uses the reconfigured first bandwidth part, or that the narrowband UE considers the reconfigured first bandwidth part is activated or active, or a reconfiguration of a first bandwidth part is effective, available, or applicable, or that the narrowband UE applies a reconfiguration of a first bandwidth part. When a bandwidth part is activated, it means that a UE uses the bandwidth part.

Using the second bandwidth part may refer to that the narrowband UE uses the second bandwidth part, or that the narrowband UE considers the second bandwidth part is activated or active.

In an embodiment, the first bandwidth part includes a first DL bandwidth part and/or a first UL bandwidth part, and the second bandwidth part includes a second DL bandwidth part and/or a second UL bandwidth part.

For initial access, the first bandwidth part includes a first initial active DL bandwidth part and/or a first initial active UL bandwidth part, and the second bandwidth part includes a second initial active DL bandwidth part and/or a second initial active UL bandwidth part. The first initial active DL bandwidth part can also be referred to as a first initial DL bandwidth part, the first initial active UL bandwidth part can also be referred to as a first initial UL bandwidth part, the second initial active DL bandwidth part can also be referred to as a second initial DL bandwidth part, and the second initial active UL bandwidth part can also be referred to as a second initial UL bandwidth part. The following description does not distinguish between the first DL bandwidth part, the first initial active DL bandwidth part, and the first initial DL bandwidth part. Similarly, the following description does not distinguish between the first UL bandwidth part, the first initial active UL bandwidth part, and the first initial UL bandwidth part. Similarly, the following description does not distinguish between the second DL bandwidth part, the second initial active DL bandwidth part, and the second initial DL bandwidth part. Similarly, the following description does not distinguish between the second UL bandwidth part, the second initial activation UL bandwidth part, and the second initial UL bandwidth part.

Generally, configurations of the first DL bandwidth part and the first UL bandwidth part are obtained by the UE after obtaining the SIB 1, and are activated by default. For the narrowband UE, the first DL bandwidth part and/or the first UL bandwidth part can be reconfigured, and at a certain time point, a reconfigured first DL bandwidth part and/or a reconfigured first UL bandwidth part can be used by the narrowband UE. Alternatively, a base station can configure the second DL bandwidth part and/or the second UL bandwidth part, and at a certain time point, the second DL bandwidth part and/or the second UL bandwidth part can be activated, or the second DL bandwidth part and/or the second UL bandwidth part can be used by the narrowband UE.

In an embodiment, that the narrowband UE determines to use the reconfigured first bandwidth part or determines to use the second bandwidth part in the S102 can be determined based on a higher-layer parameter, for example, a radio resource control (RRC) parameter.

For example, the narrowband UE determines to use the reconfigured first DL bandwidth part and/or the reconfigured first UL bandwidth part based on the higher-layer parameter. The narrowband UE determines to use the second DL bandwidth part and/or the second UL bandwidth part based on the higher-layer parameter.

In the above embodiments, before reconfiguration, the first bandwidth part (the first DL bandwidth part and the first UL bandwidth part) is equivalent to a bandwidth part shared by the narrowband UE and a non-narrowband UE. The reconfigured first bandwidth part is equivalent to a separate (or separately used) bandwidth part dedicated to the narrowband UE. The second bandwidth part can be understood as a separate (or separately used) bandwidth part of the narrowband UE, and is not shared with the narrowband UE. In other words, the second DL bandwidth part and the second UL bandwidth part are separate (or separately used) bandwidth parts.

In some embodiments, the determining to use the reconfigured first bandwidth part or determining to use the second bandwidth part in the S 102 includes:

The narrowband UE receives a first-type message from the base station within the first DL bandwidth part. The first-type message includes the SIB1, OSI, a paging message, and the like.

The narrowband UE receives the SIB1, the OSI, and the paging message within the first DL bandwidth part (shared). For the SIB1, the OSI, and the paging message, the narrowband UE and the non-narrowband UE can share a same resource, avoiding resource segmentation as much as possible. Generally, the base station cannot know existence of the narrowband UE before receiving a Msg1. Therefore, it is reasonable for the narrowband UE to use the first DL bandwidth part (shared) before the Msg1, which can avoid resource segmentation.

It should be noted that, in the context of this specification, the Msg1 may be a random access preamble, a physical random access channel (PRACH), or a random access preamble transmission; a message 2 (Msg2) may be a random access response (RAR) or a random access response reception; a Msg3 may be a physical uplink shared channel (PUSCH) for UL scheduling of the RAR; a Msg4 may be a PDSCH with a UE contention resolution identifier; and a message 4 hybrid automatic repeat request-acknowledgement (Msg4-HARQ-ACK) may be a HARQ-ACK for the Msg4 or a physical uplink control channel (PUCCH) that carries the Msg4-HARQ-ACK. Generally, for a random access channel or random access (RACH) procedure, four steps (four-step random access) are generally required. For the four-step random access, in a first step, the UE sends the PRACH, which is also known as the Msg1. In a second step, the base station sends the RAR, which is also known as the Msg2. In a third step, the UE sends the Msg3, which may carry a higher-layer message of RRCSetupRequest. In a fourth step, the base station 110 sends the Msg4, and the UE can determine successful contention access by receiving the Msg4. In other words, the base station determines acceptance of a random access request carrying a UE identity/identification (ID) of the UE. The Msg4 may carry a higher-layer message of RRCSetup. These messages are all specified in relevant protocols or standards, and are not described in the present disclosure.

After receiving the first-type message, the narrowband UE sends the Msg1 through the first UL bandwidth part (shared). Generally, the base station cannot acquire the existence of the non-narrowband UE when receiving the Msg1. Therefore, it is reasonable to use the first UL bandwidth part (shared) for the Msg1, which can avoid resource segmentation.

In an example, after the Msg1, the narrowband UE starts to use the reconfigured first DL bandwidth part, or the narrowband UE starts to use the second DL bandwidth part, in other words, the second DL bandwidth part is activated. It can be understood that "after the Msg1" means "after the narrowband UE sends the Msg1 to a network equipment". The network equipment includes the base station.

In an example, after the Msg1, the narrowband UE can receive the Msg2 and/or the Msg4 from the network equipment within the reconfigured first DL bandwidth part or the second DL bandwidth part, and the narrowband UE can send a Msg3-HARQ-ACK and/or the Msg4-HARQ-ACK to the network equipment within the reconfigured first UL bandwidth part or the second DL bandwidth part.

In an example, after the Msg1, the second UL bandwidth part is activated.

The narrowband UE receives the Msg2 and/or the Msg4 within the reconfigured first DL bandwidth part (separate) or the (active) second DL bandwidth part (separate), and sends the subsequent Msg3-HARQ-ACK and/or Msg4-HARQ-ACK within the reconfigured first UL bandwidth part (separate) or the (active) second UL bandwidth part (separate). In this way, each subsequent operation after the Msg1 is within a separate DL bandwidth part and a separate UL bandwidth part (center frequencies of the two bandwidth parts may be aligned, and a bandwidth of each of the two bandwidth parts is not greater than a bandwidth of the narrowband UE), thereby reducing possible RF retuning. The RF retuning may be performed once from a shared DL bandwidth part to a shared UL bandwidth part, for example, when a center frequency of the shared DL bandwidth part is not aligned with a central frequency point of a frequency resource of a RACH occasion (RO). The RF retuning may be performed once from the shared UL bandwidth part to the separate DL bandwidth part, for example, when the center frequency of the frequency resource of the RO is not aligned with a center frequency of the separate DL bandwidth part. Therefore, the RF retuning is performed twice in total. This is actually taking the Msg1 as the time point of activating the separate DL bandwidth part and the separate UL bandwidth part.

In some embodiments, the determining to use the reconfigured first bandwidth part or determining to use the second bandwidth part in the S102 includes:
The narrowband UE receives a first-type message from the base station within the first DL bandwidth part (shared), such as the SIB1, OSI, and a paging message.

After receiving the first-type message, the narrowband UE can send a Msg1 within the reconfigured first UL bandwidth part (separate), or send a Msg1 within the second UL bandwidth part (separate). In other words, the narrowband UE sends the Msg1 within a separate UL bandwidth part.

In order to enable the narrowband UE to send the Msg1 by using the separate UL bandwidth part, the base station needs to configure an RO resource of the narrowband UE in the reconfigured first UL bandwidth part or the second UL bandwidth part. This is also reasonable. In this way, the base station can distinguish between the narrowband UE and the non-narrowband UE based on RO resources within different UL bandwidth parts.

It should be noted that, after the Msg 1, the narrowband UE starts to use the reconfigured first DL bandwidth part, or the narrowband UE starts to use the second DL bandwidth part. In other words, the reconfigured first DL bandwidth part or the second UL bandwidth part is activated. For the separate UL bandwidth part, since the Msg1 is sent by using the separate UL bandwidth part, the reconfigured first UL bandwidth part or the second UL bandwidth part is equivalent to being activated after SIB1 configuration. It can be understood that "after the Msg1" means "after the narrowband UE sends the Msg1 to a network equipment".

In an example, the narrowband UE receives a Msg2 and/or a Msg4 within the reconfigured first DL bandwidth part (separate) or the (active) second DL bandwidth part (separate), and sends a Msg3-HARQ-ACK and/or a Msg4-HARQ-ACK within the reconfigured first UL bandwidth part (separate) or the second UL bandwidth part (separate).

In this way, each subsequent operation after the Msg1 is within a separate DL bandwidth part and the separate UL bandwidth part (center frequencies of the two bandwidth parts may be aligned, and a bandwidth of each of the two bandwidth parts is not greater than a bandwidth of the narrowband UE), thereby reducing possible RF retuning. The RF retuning is performed once from a shared UL bandwidth part to the separate DL bandwidth part, for example, when a center frequency of a frequency resource of an RO is not aligned with a center frequency of the separate DL bandwidth part. In other words, the RF retuning is performed once in total. This is actually taking the Msg1 as the time point of activating a separate initial active DL bandwidth part.

In some embodiments, the determining to use the reconfigured first bandwidth part or determining to use the second bandwidth part in the S102 includes:
The narrowband UE receives a first-type message from the base station within the reconfigured first DL bandwidth part (separate) or the second DL bandwidth part (separate)), such as the SIB 1, OSI, and a paging message. In this way, the narrowband UE can use completely separate SIB 1, OSI, and paging resources, thereby achieving high flexibility.

AMsg1 is sent within the first UL bandwidth part. Generally, the narrowband UE sends the Msg1 within the first UL bandwidth part (shared). The base station cannot acquire existence of the non-narrowband UE when receiving the Msg1. Therefore, it is reasonable to use a shared initial UL bandwidth part for the Msg1, which can avoid resource segmentation.

That is, after sending the Msg1 to a network equipment, the narrowband UE starts to use the reconfigured first UL bandwidth part, or starts to use the second UL bandwidth part. In other words, the reconfigured first UL bandwidth part or the second UL bandwidth part is activated. The second UL bandwidth part is activated after SIB 1 configuration.

In an embodiment, the narrowband UE receives a Msg2 and/or a Msg4 within the reconfigured first DL bandwidth part (separate) or the (active) second DL bandwidth part (separate), and sends a Msg3-HARQ-ACK and/or a Msg4-HARQ-ACK within the reconfigured first UL bandwidth part (separate) or the (active) second UL bandwidth part (separate).

Each subsequent operation after the Msg1 is within a separate DL bandwidth part and a separate UL bandwidth part (center frequencies of the second DL bandwidth part and the second UL bandwidth part may be aligned, and a bandwidth of each of the second DL bandwidth part and the second UL bandwidth part is not greater than a bandwidth of the narrowband UE), thereby reducing possible RF retuning. The RF retuning may be performed once from the separate DL bandwidth part to a shared UL bandwidth part. For example, when a center frequency of a shared DL bandwidth part is not aligned with a central frequency point of a frequency resource of an RO. The RF retuning may be performed once from the shared UL bandwidth part to the separate DL bandwidth part. For example, when the center frequency of the frequency resource of the RO is not aligned with a center frequency of the separate DL bandwidth part. Therefore, the RF retuning is performed twice in total. This is actually taking the Msg1 as the time point of activating the separate UL bandwidth part.

In the second solution in the above related technical solutions, the base station configures a same narrowband DL bandwidth part and narrowband UL bandwidth part for the narrowband UE and the non-narrowband UE. However, when the second solution adopts the shared DL bandwidth part (the first DL bandwidth part), a frequency position of a reconfigured shared DL bandwidth part (obtained by using the SIB 1) is effective after the Msg4. As a result, after the Msg4, the narrowband UE works within a bandwidth part greater than the bandwidth of the narrowband UE. It can be understood that "after the Msg4" means "after the UE receives the Msg4 from the network equipment". The network equipment includes the base station.

Therefore, when the shared DL bandwidth part is used, it is necessary to limit the DL bandwidth part and/or a resource within the DL bandwidth part.

Based on this, embodiments of the present disclosure further provide a method for configuring a bandwidth part. The method includes following steps:
In S202, a narrowband UE determines a configuration of a first DL bandwidth part and/or determines a resource configuration within a first UL bandwidth part and/or a resource configuration within the first DL bandwidth part.

The first DL bandwidth part and the first UL bandwidth part are shared bandwidth parts.

The determining the configuration of the first DL bandwidth part in the S202 may include at least one of solutions described in following embodiments:
In an embodiment, after a Msg4, the narrowband UE determines that a frequency position (indicated by a higher-layer parameter *LocationAndBandwidth*) of a reconfigured first DL bandwidth part is not effective, available, or applicable. In other words, the narrowband UE does not use the frequency position of the reconfigured first DL bandwidth part.

In an embodiment, after a Msg4, the narrowband UE determines to continuously use a frequency position of a CORESETO as a frequency position of the first DL bandwidth part.

In an embodiment, the narrowband UE determines that a frequency position of a DL bandwidth part of a dedicated RRC configuration includes or equals a CORESETO. It can be understood that after entering a connected state, the narrowband UE uses the DL bandwidth part including the CORESETO, which allows the narrowband UE to still use a resource in an idle state.

According to the above embodiments, a shared DL bandwidth part is limited while being used, which prevents the narrowband UE from working within a DL bandwidth part larger than a bandwidth of the narrowband UE.

In an embodiment, a Msg1 sent by a UE to a network equipment (for example, a base station) carries a first indication, and the network equipment (for example, the base station) can determine, based on the first indication, whether the UE is the narrowband UE. In this field, the first indication is used by the network equipment (for example, the base station) to identify the narrowband UE in advance (before UE capability reporting), and can be referred to as an early identification indication.

When the first indication (for identifying the narrowband UE by the base station) is carried by the Msg1, the base station determines, before sending a Msg2, that a UE sending a Msg3 may be the narrowband UE. Therefore, in resource scheduling (Uplink grant) for the Msg3 in the Msg2, it is indicated that a resource of the Msg3 is a resource with its center frequency aligned with a center frequency of the CORESETO. In this way, the narrowband UE does not need to perform RF retuning after the Msg3. That is, when the first indication is carried by the Msg1, the UE can determine that the resource of the Msg3 is limited within the CORESETO, thereby achieving resource limitation within the DL bandwidth part.

Further, when the first indication is carried by the Msg1, the determining the resource configuration within the first UL bandwidth part in the S202 may include at least one of solutions described in following embodiments:

In an embodiment, the UE determines that the resource of the Msg3 is limited within the CORESETO.

In an embodiment, the UE assumes that the resource of the Msg3 is limited within the CORESETO.

In an embodiment, the UE does not expect that the resource of the Msg3 is not within the CORESETO.

In an embodiment, if the resource of the Msg3 is not within the CORESETO, it is determined that access by the UE is barred.

In another embodiment, when the first indication is carried by the Msg1 or the Msg3, the network equipment (for example, the base station) can determine that a PUCCH resource of a Msg4-HARQ-ACK is a resource whose center frequency is aligned with the center frequency of the CORESETO. In this way, the narrowband UE does not need to perform RF retuning after the Msg4.

Further, when the first indication is carried by the Msg1 or the Msg3, the determining the resource configuration within the first UL bandwidth part in the S202 may include at least one of solutions described in following embodiments:

In an embodiment, the UE assumes that a resource of the Msg4-HARQ-ACK is limited within the CORESETO.

In an embodiment, the UE does not expect that a resource of the Msg4-HARQ-ACK is not within the CORESETO.

In an embodiment, the UE determines that a resource of the Msg4-HARQ-ACK is limited within the CORESETO.

In an embodiment, if a resource of the Msg4-HARQ-ACK is not within the CORESETO, the UE determines that access is barred.

A frequency position of a reconfigured DL bandwidth part (which may be obtained by using a SIB1) is effective after the Msg4. As a result, after the Msg4, the narrowband UE works within a bandwidth part greater than the bandwidth of the narrowband UE. Therefore, it is required to limit a resource within the first DL bandwidth part.

In an embodiment, the determining the resource configuration within the first DL bandwidth part in the S202 may include the following operation:

After the Msg4, the narrowband UE determines that a PDSCH scheduled in a DCI format 1-0 is within the CORESETO. In a relevant protocol or standard, when the DCI format 1-0 is used for UE specific search space (USS), a PDSCH frequency-domain resource of type 1 is used, and a frequency range of the PDSCH can be adjusted based on a factor K to update the frequency resource unit from 1 PRB to K PRBs.

Therefore, to limit the PDSCH within the CORESETO, it is only required to impose the following limitation: after the Msg4, the narrowband UE determines that a factor of the frequency resource unit of the PDSCH scheduled in the DCI format 1-0 is 1. It can be understood that "after the Msg4" means "after the UE (for example, the base station) receives the Msg4 from the network equipment".

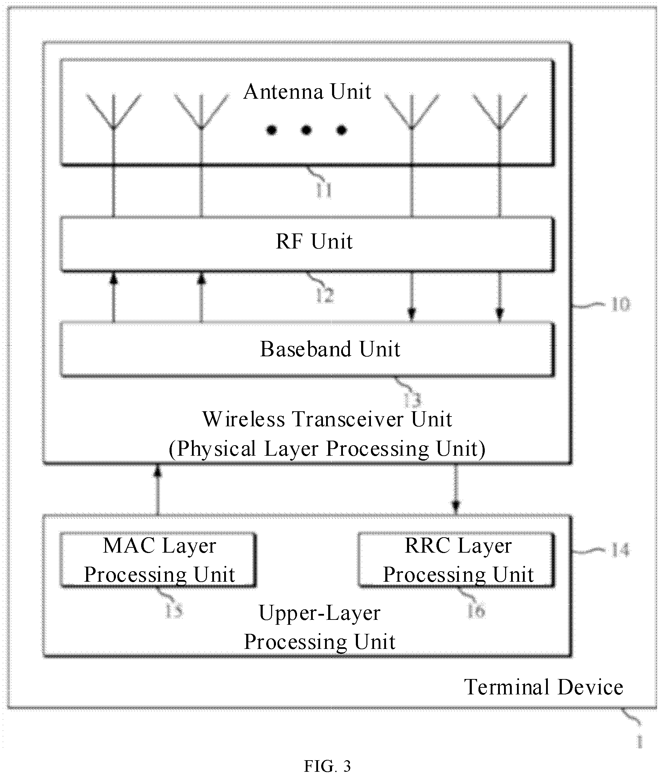

FIG. 3 is a schematic structural diagram of a narrowband UE according to some embodiments of the present disclosure. As shown in the FIG. 3, the narrowband UE includes a wireless transceiver unit 10 and an upper-layer processing unit 14. The wireless transceiver unit 10 includes an antenna unit 11, an RF unit 12, and a baseband unit 13. The upper-layer processing unit 14 includes a media access control (MAC) layer processing unit 15 and an RRC layer processing unit 16. The wireless transceiver unit 10 is also referred to as a sending unit, a reception unit, a monitoring unit, or a physical layer processing unit. The upper-layer processing unit 14 is also referred to as a measurement unit, selection unit, or control unit 14. The upper-layer processing unit 14 outputs UL data (also referred to as a transmission block) generated by a user operation and the like to the wireless transceiver unit 10.

The upper-layer processing unit 14 processes some or all of a MAC layer, a packet data convergence protocol (PDCP) layer, a radio link control (RLC) layer, and an RRC layer. The MAC layer processing unit 15 of the upper-layer processing unit 14 processes the MAC layer. The MAC layer processing unit 15 controls transmission of a scheduling request based on various setting information/parameters managed by the RRC layer processing unit 16. The RRC layer processing unit 16 of the upper-layer processing unit 14 processes the RRC layer. The RRC layer processing unit 16 manages the setting information/parameters of the narrowband UE itself.

The RRC layer processing unit 16 sets the setting information/parameters based on an upper-layer signal received from a network equipment (for example, a base station). In other words, the RRC layer processing unit 16 sets the setting information/parameters based on information that is received from the network equipment (for example, the base station) and indicates the setting information/parameters. The RRC layer processing unit 16 controls (determines) resource allocation based on DL control information received from the network equipment (for example, the base station). The wireless transceiver unit 10 performs physical layer processing such as modulation, demodulation, encoding, and decoding. The wireless transceiver unit 10 separates, demodulates, and decodes a signal received from the network equipment (for example, the base station), and outputs decoded information to the upper-layer processing unit 14. The wireless transceiver unit 10 generates a to-be-sent signal by modulating and encoding the data, and sends the signal to the network equipment (for example, the base station).

The wireless transceiver unit 10 can have the function of receiving one or more reference signals in a cell. The wireless transceiver unit 10 can also have the function of sending a random access preamble by using a RACH occasion determined by the upper-layer processing unit 14. The RF unit 12 converts (down converts) a signal received through the antenna unit 11 into a baseband signal through orthogonal demodulation to remove an unnecessary frequency component. The RF unit 12 outputs a processed analog signal to the baseband unit. The baseband unit 13 converts the analog signal input from the RF unit 12 into a digital signal. The baseband unit 13 removes a part equivalent to a cyclic prefix (CP) from the converted digital signal, performs Fast Fourier Transform (FFT) on a signal obtained by removing the CP, and extracts a frequency-domain signal. The baseband unit 13 performs Inverse Fast Fourier Transform (IFFT) on data to generate an orthogonal frequency division multiplexing (OFDM) symbol, and attaches a CP to the generated OFDM symbol to generate a baseband digital signal, and converts the baseband digital signal into an analog signal. The baseband unit 13 outputs the converted analog signal to the RF unit 12. The RF unit 12 uses a low-pass filter to remove an excess frequency component from the analog signal input by the baseband unit 13, up-converts the analog signal into a carrier frequency, and sends the carrier frequency through the antenna unit 11. In addition, the RF unit 12 amplifies power. In addition, the RF unit 12 can also have a function of determining transmit power of a UL signal and/or a UL channel sent in a cell of a region. The RF unit 12 is also referred to as a transmit power control unit.

In embodiments of this application, functional module division may be performed on the electronic device according to the foregoing embodiments. For example, functional module division may be conducted based on corresponding functions, or two or more functions may be integrated into one processing module. The above integrated module may be implemented in a form of hardware, or may be implemented in a form of a functional module of software. It should be noted that the division of modules in the embodiments of the present application is schematic, which is only logical function division, and there may be another division method in actual implementation.

Those skilled in the art can clearly understand that, for convenience and conciseness of description, only the division of the foregoing function modules is used as an example. In practical applications, the foregoing functions may be allocated to and completed by different function modules as required, that is, an internal structure of the apparatus is divided into different function modules to complete all or some of the functions described above. For a specific working process of the system, apparatus, and unit described above, refer to the corresponding process in the foregoing method embodiments. Details are not described herein again.

In addition, functional units in the embodiments of this application may be integrated into one processing unit, or each of the units may exist alone physically, or two or more units are integrated into one unit. The above integrated unit may be implemented either in a form of hardware or in a form of a software functional unit.

The integrated unit, if implemented in the form of a software functional unit and sold or used as a stand-alone product, may be stored in a computer-readable storage medium. Based on this understanding, the technical solutions of the present application, in essence or the part contributing to the prior art, or some or all of the technical solutions may be embodied in a form of a software product. The computer software product is stored on a storage medium, and includes several instructions to cause a computer device (which may be a personal computer, a server, or a network equipment) to perform all or some steps of the methods according to the embodiments of the present application. The above storage medium includes any medium that may store program codes, such as a USB flash drive, a removable hard disk, a read-only memory, a random access memory, a magnetic disk and an optical disc.

The above descriptions are only specific implementations of the embodiments of the present disclosure. However, the protection scope of the present disclosure is not limited thereto, and any modification or substitution within the technical scope disclosed by the embodiments of this application shall fall within the protection scope of the embodiments of this application. Therefore, the protection scope of the present application should be subject to the protection scope of the appended claims.

## Claims

1. A method for activating a bandwidth part, applied to a user equipment (UE), wherein the method comprises:
determining to use a reconfigured first bandwidth part or determining to use a second bandwidth part.

2. The method according to claim 1, wherein a first bandwidth part comprises a first downlink (DL) bandwidth part and/or a first uplink (UL) bandwidth part, and the second bandwidth part comprises a second DL bandwidth part and/or a second UL bandwidth part.

3. The method according to claim 2, wherein said determining to use the reconfigured first bandwidth part or determining to use the second bandwidth part comprises:
determining to use a reconfigured first DL bandwidth part and/or a reconfigured first UL bandwidth part based on a higher-layer parameter; or
determining to use the second DL bandwidth part and/or the second UL bandwidth part based on a higher-layer parameter.

4. The method according to claim 2, wherein said determining to use the reconfigured first bandwidth part comprises:
receiving a message 2 (Msg2) or a message 4 (Msg4) within the reconfigured first DL bandwidth part; and/or
sending a message 3 (Msg3) or a Msg4 hybrid automatic repeat request-acknowledgement (Msg4-HARQ-ACK) within the reconfigured first UL bandwidth part.

5. The method according to claim 2, wherein said determining to use the second bandwidth part comprises:
receiving a Msg2 or a Msg4 within the second DL bandwidth part; and/or
sending a Msg3 or a Msg4-HARQ-ACK within the second UL bandwidth part.

6. The method according to claim 2, further comprising:
activating or using the reconfigured first UL bandwidth part and the reconfigured first DL bandwidth part after sending a Msg1.

7. The method according to claim 2, further comprising:
activating or using the second UL bandwidth part and the second DL bandwidth part after sending a Msg1.

8. The method according to claim 2, wherein said determining to use the reconfigured first bandwidth part comprises:
receiving a Msg2 or a Msg4 within the reconfigured first DL bandwidth part; or
sending a Msg1, a Msg3, or a Msg4-HARQ-ACK within the reconfigured first UL bandwidth part.

9. The method according to claim 2, wherein said determining to use the second bandwidth part comprises:
receiving a Msg2 or a Msg4 within the second DL bandwidth part; or
sending a Msg1, a Msg3, or a Msg4-HARQ-ACK within the second UL bandwidth part.

10. The method according to claim 2, further comprising:
activating or using the reconfigured first DL bandwidth part after sending a Msg1.

11. The method according to claim 2, further comprising:
activating or using the second DL bandwidth part after sending a Msg1.

12. The method according to claim 2, wherein said determining to use the reconfigured first bandwidth part comprises:
receiving a first-type message, a Msg2, or a Msg4 within the reconfigured first DL bandwidth part; and/or
sending a Msg3 or a Msg4-HARQ-ACK within the reconfigured first UL bandwidth part.

13. The method according to claim 2, wherein said determining to use the second bandwidth part comprises:
receiving a first-type message, a Msg2, or a Msg4 within the second DL bandwidth part; and/or
sending a Msg3 or a Msg4-HARQ-ACK within the second UL bandwidth part.

14. The method according to claim 2, further comprising:
activating or using the reconfigured first UL bandwidth part after sending a Msg1.

15. The method according to claim 2, further comprising:
activating or using the second UL bandwidth part after sending a Msg1.

16. The method according to claim 12 or 13, wherein the first-type message comprises at least one of a system information block 1 (SIB1), other system information (OSI), or a paging message.

17. A method for configuring a bandwidth part, applied to a UE, wherein the method comprises:
determining a configuration of a first DL bandwidth part, and/or determining a resource configuration within a first UL bandwidth part and/or a resource configuration within the first DL bandwidth part.

18. The method according to claim 17, wherein said determining the configuration of the first DL bandwidth part comprises:
determining that a reconfigured frequency position is not effective; or
using a frequency position of a control resource set 0 (CORESETO) as a frequency position of a DL bandwidth part; or
determining that a frequency position of a DL bandwidth part of a dedicated radio resource control (RRC) configuration comprises a CORESETO.

19. The method according to claim 18, wherein said determining that the reconfigured frequency position is not effective comprises:
after receiving a Msg4, determining that the reconfigured frequency position is not effective.

20. The method according to claim 18, wherein said using the frequency position of the CORESETO as the frequency position of the DL bandwidth part comprises:
after receiving a Msg4, using the frequency position of the CORESETO as the frequency position of the DL bandwidth part.

21. The method according to claim 17, wherein said determining the resource configuration within the first UL bandwidth part and/or the resource configuration within the first DL bandwidth part comprises:
determining that a resource of a Msg3 is limited within a CORESETO; or
assuming that a resource of a Msg3 is limited within a CORESETO; or
skipping an expectation that a resource of a Msg3 is not within a CORESETO.

22. The method according to claim 21, further comprising:
when the resource of the Msg3 is not within the CORESETO, determining that access is barred.

23. The method according to claim 17, wherein said determining the resource configuration within the first UL bandwidth part and/or the resource configuration within the first DL bandwidth part comprises:
when a Msg1 carries a first indication, determining the resource configuration within the first UL bandwidth part.

24. The method according to claim 23, wherein the first indication is configured to indicate that the UE is a narrowband UE.

25. The method according to claim 17, wherein said determining the resource configuration within the first UL bandwidth part and/or the resource configuration within the first DL bandwidth part comprises:
determining that a resource of a physical uplink control channel (PUCCH) of a Msg4-HARQ-ACK is limited within a CORESETO; or
assuming that a resource of a Msg4-HARQ-ACK is limited within a CORESETO; or
skipping an expectation that a resource of a Msg4-HARQ-ACK is not within a CORESETO.

26. The method according to claim 25, further comprising:
when the resource of the Msg4-HARQ-ACK is not within the CORESETO, determining that access is barred.

27. The method according to claim 17, wherein said determining the resource configuration within the first UL bandwidth part and/or the resource configuration within the first DL bandwidth part comprises:
when a Msg1 or a Msg3 carries a second indication, determining the resource configuration within the first UL bandwidth part.

28. The method according to claim 27, wherein the second indication is configured to indicate that the UE is a narrowband UE.

29. The method according to claim 17, wherein said determining the resource configuration within the first UL bandwidth part and/or the resource configuration within the first DL bandwidth part comprises:
determining that a physical downlink shared channel (PDSCH) scheduled in a DL control information format 1-0 (DCI format 1-0) is within a CORESETO.

30. The method according to claim 17, wherein said determining the resource configuration within the first UL bandwidth part and/or the resource configuration within the first DL bandwidth part comprises:
after receiving a Msg4, determining that a factor of a frequency resource unit of a PDSCH scheduled in a DCI format 1-0 is 1.

31. An apparatus for activating a bandwidth part, comprising a determining module configured to determine to use a reconfigured first bandwidth part or determine to use a second bandwidth part.

32. An apparatus for configuring a bandwidth part, comprising a determining module configured to determine a configuration of a first DL bandwidth part, and/or determine a resource configuration within a first UL bandwidth part and/or a resource configuration within the first DL bandwidth part.

33. A chip module, comprising the apparatus according to claim 31.

34. A chip module, comprising the apparatus according to claim 32.

35. An electronic device, wherein the electronic device comprises a processor and a memory, the memory stores an application program or a program instruction, and the application program or the program instruction is executed by the processor to enable the electronic device to execute the method according to any one of claims 1 to 16.

36. An electronic device, wherein the electronic device comprises a processor and a memory, the memory stores an application program or a program instruction, and the application program or the program instruction is executed by the processor to enable the electronic device to execute the method according to any one of claims 17 to 30.
